# EUROPEAN PATENT SPECIFICATION

(11) **EP 3 367 280 B1**
(45) Date of publication and mention of the grant of the patent: **30.03.2022**
(21) Application number: 16864345.0
(22) Date of filing: 11.11.2016
(51) Int. Cl.: G06F 21/32, G05B 23/02, H02J 3/04, H02J 13/00, G05B 19/042, G05B 19/418

(54) **CENTRALIZED CONTROL SYSTEM**
ZENTRALISIERTES STEUERUNGSSYSTEM
SYSTÈME DE COMMANDE CENTRALISÉE

(30) Priority: 13.11.2015 JP 2015223491
(43) Date of publication of application: 29.08.2018
(73) Proprietor: Tokyo Electric Power Company Holdings, Incorporated, Tokyo 100-8560 (JP); Toshiba Energy Systems & Solutions Corporation, Saiwai-ku Kawasaki-shi Kanagawa 2120013 (JP)
(72) Inventor: YAMAMOTO Junya, Tokyo 100-8560 (JP); ONISHI Masami, Tokyo 105-8001 (JP); SHINGU Toshiomi, Tokyo 105-8001 (JP); TAKEUCHI Michie, Tokyo 105-8001 (JP); NOMURA Nao, Tokyo 105-8001 (JP)
(74) Representative: EP&C
(86) International application number: PCT/JP2016/083502
(87) International publication number: WO 2017/082384

(56) References cited:
- EP-A2- 1 621 944
- EP-A2- 1 780 657
- JP-A- 2004 364 421
- JP-A- 2006 323 475
- JP-A- 2012 008 986
- US-A1- 2011 035 338
- US-A1- 2013 294 658

## Description

### [Technical Field]

The present invention relates to a centralized control system.

### [Background Art]

Conventionally, a technique for centrally controlling a power facility such as a substation has been proposed (for example, Japanese Unexamined Patent Application, First Publication No. 2003-224932).

EP 1 621 944 A2 discloses an industrial automation system comprising a security access device, and industrial automation device, a user interface, and a security interface. The user interface is configured to provide a user with access to data stored inside the industrial automation device. The security interface is configured to receive information from the access device and, based on the information received from the access device, to provide authorization for the user to access the data stored inside the industrial automation device using the user interface.

US 2013/294658 A1 discloses a biometric information acquisition apparatus acquiring biometric information to be used for verification. The biometric information acquisition apparatus includes a blood flow increasing unit, a biometric information acquiring unit, a feature amount evaluating unit, and a reacquisition determining unit. The blood flow increasing unit increases blood flow of an object person. The biometric information acquiring unit acquires the biometric information from the object person. The feature amount evaluating unit evaluates the feature amount of the acquired biometric information. The reacquisition determining unit determines whether to cause the blood flow increasing unit to operate and then cause the biometric information acquiring unit to reacquire the biometric information when the evaluated feature amount does not reach a predetermined threshold.

### [Summary of Invention]

### [Technical Problem]

In the conventional centralized control system described in Japanese Unexamined Patent Application, First Publication No. 2003-224932, there are a plurality of terminals capable of performing an operation, through a network. For this reason, in the conventional centralized control system, since the number of persons who may operate the terminals is increased as compared with a case where the number of terminals is small, there is a problem that not only a person who has an authority for operation but also a person who does not have an authority for operation may operate the terminal. That is, in the conventional centralized control system, there is a problem that it is not possible to refuse an operation exceeding a range of an operation authority of an operator of the power facility.

The present invention has been made in view of the above-described points, and provides a centralized control system capable of refusing an operation exceeding a range of an operation authority of an operator of a power facility.

### [Solution to Problem]

According to an aspect of the present invention, a centralized power facility control system according to claim 1 is provided.

In addition, the centralized power facility control system according to any one of claims 2, 3 and 4 is provided.

### [Advantageous Effects of Invention]

According to the present invention, it is possible to refuse an operation exceeding a range of an operation authority of an operator of a power facility.

### [Brief Description of Drawings]

Fig. 1 is a schematic diagram showing an example of a constitution of a centralized control system according to an embodiment of the present invention.
Fig. 2 is a schematic diagram showing an example of a specific constitution of a network of the present embodiment.
Fig. 3 is a schematic diagram showing an overview of an operation room of a server base of the present embodiment.
Fig. 4 is a schematic diagram showing an example of a constitution of a device provided in a control console of the server base of the present embodiment.
Fig. 5 is a block diagram showing a functional constitution of the centralized control device of the present embodiment.
Fig. 6 is a flowchart showing an example of an operation of the centralized control device of the present embodiment.
Fig. 7 is a diagram showing an example of information stored in advance in a storage unit of the present embodiment.
Fig. 8 is a table showing an example of a relationship between a security mode and work performed in the present embodiment.
Fig. 9 is a diagram showing an example of an authority range of operations in the present embodiment.
Fig. 10 is a diagram showing an example of an operation procedure of a device in the present embodiment.
Fig. 11 is a diagram showing an example of a device operation screen displayed on a display unit of the present embodiment.
Fig. 12 is a flowchart showing a specific example of the operation of the centralized control device of the present embodiment.
Fig. 13 is a diagram showing an example of the operation screen displayed on the display unit of the present embodiment.

### [Description of Embodiments]

### [Embodiment]

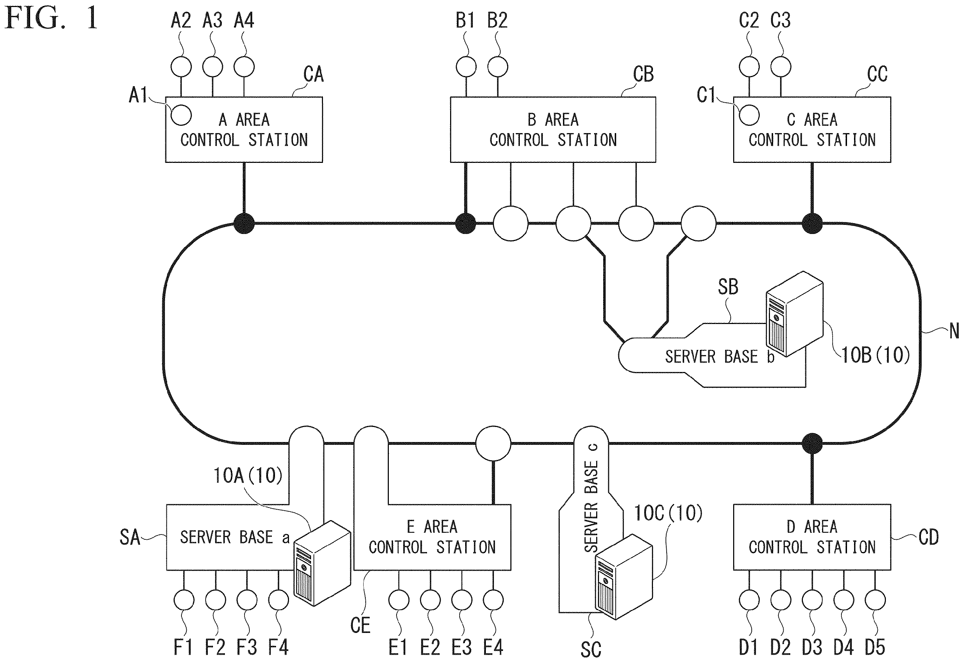

Hereinafter, an embodiment of a centralized control system according to the present invention will be described with reference to the drawings. Fig. 1 is a schematic diagram showing an example of a constitution of a centralized control system 1 according to an embodiment of the present invention.

### [Constitution of centralized control system]

The centralized control system 1 includes server bases S and control stations C. The server bases S and the control stations C are connected to each other through a network N. In this example, the centralized control system 1 includes three server bases S, that is, a server base SA, a server base SB, and a server base SC. In addition, in this example, the centralized control system 1 includes five control stations C, that is, an A area control station CA, a B area control station CB, a C area control station CC, a D area control station CD, and an E area control station CE.

The server base S includes a centralized control device 10. In this example, the server base SA includes a centralized control device 10A. The server base SB includes a centralized control device 10B. The server base SC includes a centralized control device 10C. In the following description, in a case where the centralized control device 10A, the centralized control device 10B, and the centralized control device 10C are not distinguished from each other, the centralized control device 10A, the centralized control device 10B, and the centralized control device 10C are commonly referred to as the centralized control device 10. A plurality of centralized control devices 10 constitute a system with duplication. Specifically, in the centralized control system 1, the centralized control device 10A is commonly used. In a case where a problem occurs in the centralized control device 10A, the centralized control device 10B operates instead of the centralized control device 10A. In addition, in a case where a problem occurs in both the centralized control device 10A and the centralized control device 10B, the centralized control device 10C operates instead of the centralized control device 10A and the centralized control device 10B. A plurality of server bases S are disposed in different areas in the centralized control system 1, thereby causing duplication in the system.

The control station C controls a power facility on the basis of control by the centralized control device 10. In this example, the power facility is a substation T. That is, the control station C controls the substation T.

Specifically, the A area control station CA controls a substation A1, a substation A2, a substation A3, and a substation A4. In this example, the A area control station CA is installed in a site of the substation A1. The B area control station CB controls a substation B1 and a substation B2. The C area control station CC controls a substation C1, a substation C2, and a substation C3. In this example, the C area control station CC is installed in a site of the substation C1. The D area control station CD controls a substation D1, a substation D2, a substation D3, a substation D4, and a substation D5. The E area control station CE controls a substation E1, a substation E2, a substation E3, and a substation E4.

In addition, the server base S may control the power facility in the same manner as the control station C. Specifically, the server base SA controls a substation F1, a substation F2, a substation F3, and a substation F4 without passing through the network N.

In the following description, "the server base S controls the substation T without passing through the Network N" is also described as "the server base S directly controls the substation T". In addition, "the server base S controls the substation T through the Network N and the control station C" is also described as "the server base S indirectly controls the substation T".

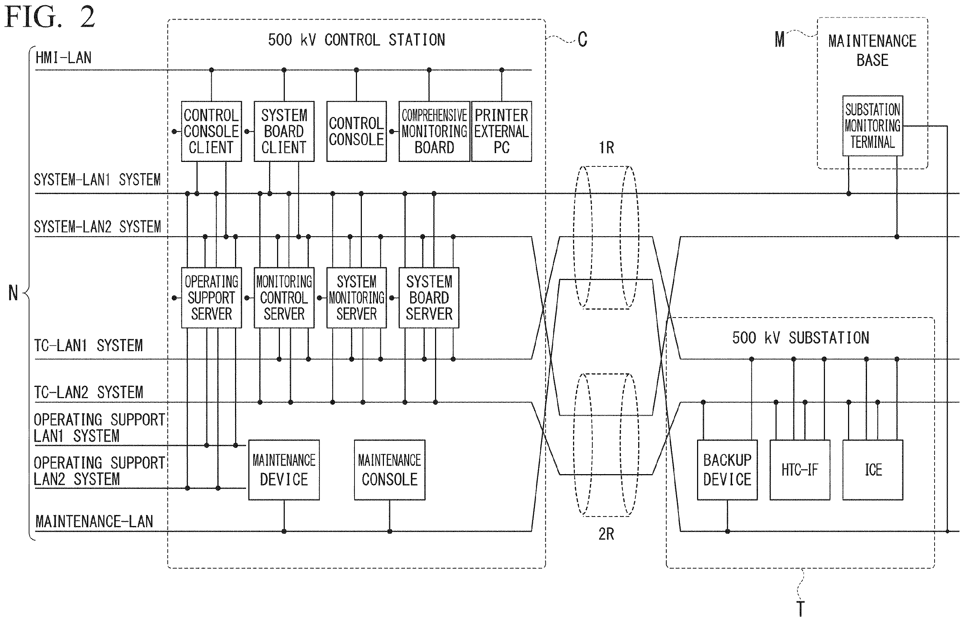

Next, a more specific constitution of the network W connecting the control station C and the substation T to each other will be described with reference to Fig. 2.

Fig. 2 is a schematic diagram showing an example of a specific constitution of the network N of the present embodiment. The network N includes a plurality of sub-networks. The sub network includes an HMI-LAN as a human interface, a system LAN, a TC-LAN for information transmission, an operating support LAN, and a maintenance LAN. Among such sub networks, the system LAN, the TC-LAN, and the operating support LAN are duplicated.

Among such duplicated sub networks, the system LAN and the TC-LAN are constituted by double rings of a first ring 1R and a second ring 2R. The control station C and the substation T are connected to each other by the double ring network N.

In addition, a maintenance base M may be connected to the system LAN. The maintenance base M includes a monitoring terminal, with which it is possible to monitor a state of the substation T and control the substation T.

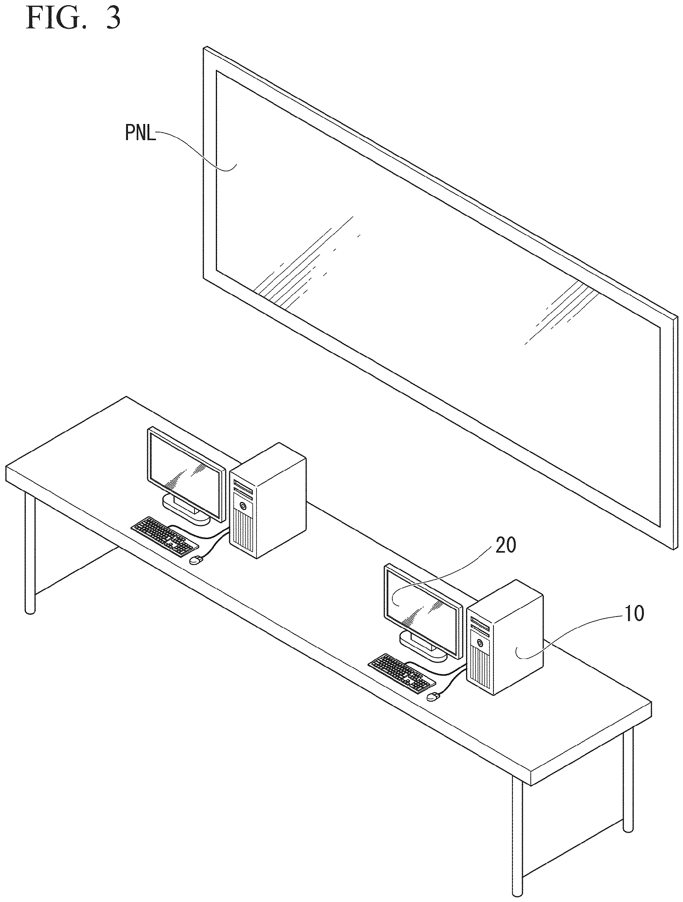

Next, a specific constitution example of the server base S will be described with reference to Fig. 3.

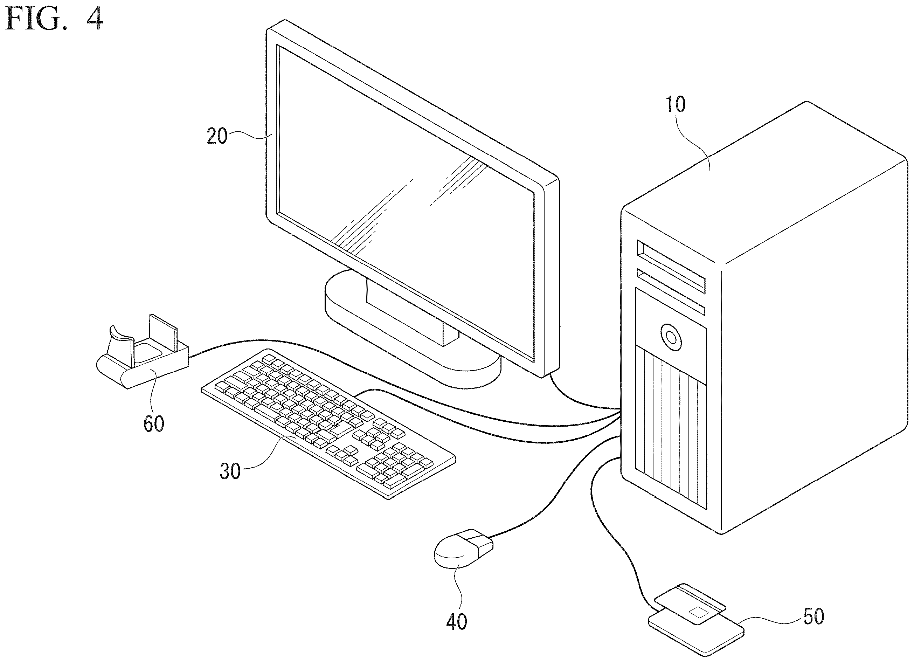

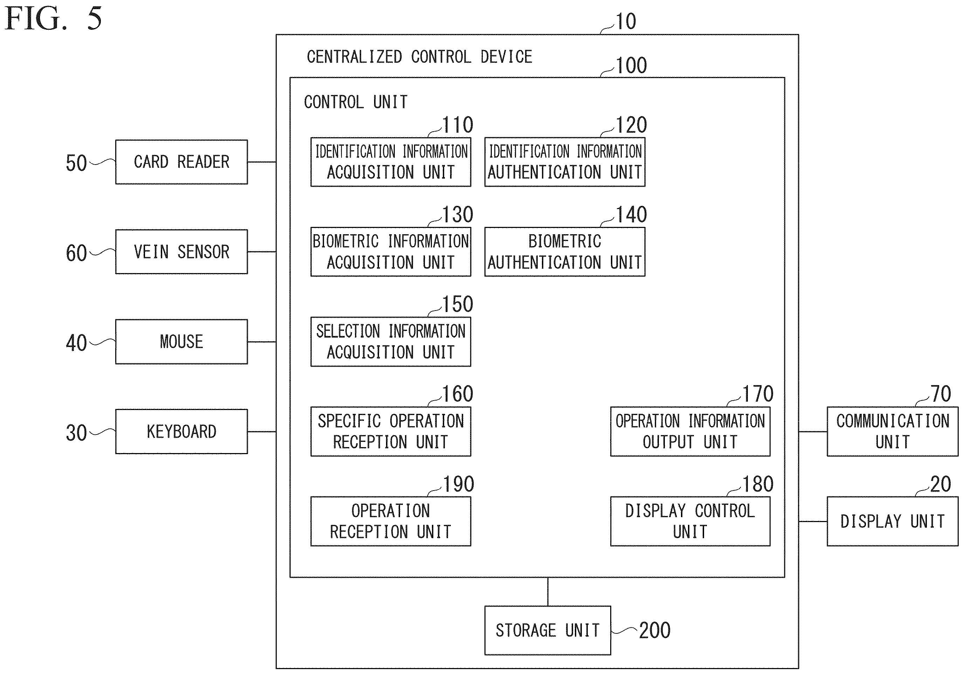

Fig. 3 is a schematic diagram showing an overview of an operation room of the server base S of the present embodiment. The server base S includes a display unit 20 and a centralized display panel PNL in addition to the above-described centralized control device 10. Here, for example, the centralized control device 10 is a computer device. The centralized control device 10 is provided in the operation room or in a server room of the server base S. Here, a case where the centralized control device 10 is provided in the operation room of the server base S will be described as an example. The display unit 20 is provided in a control console of the operation room and presents information to an operator. The centralized display panel PNL is also referred to as a comprehensive monitoring board and presents information to a plurality of operators. Next, a constitution of devices provided in the control console will be described with reference to Fig. 4 and Fig. 5.

Fig. 4 is a schematic diagram showing an example of a constitution of devices provided in the control console of the server base S and the control station C of the present embodiment. The control console of the server base S is provided with a keyboard 30, a mouse 40, a card reader 50, and a vein sensor 60 in addition to the centralized control device 10 and the display unit 20.

Fig. 5 is a block diagram showing a functional constitution of the centralized control device 10 of the present embodiment. The centralized control device 10 includes a control unit 100 and a storage unit 200. The keyboard 30, the mouse 40, the card reader 50, and the vein sensor 60 described above provide information to the control unit 100. The display unit 20 presents information output by the control unit 100 as an image to the operator. A communication unit 70 performs communication through the network N between the centralized control device 10 and the control station C.

The card reader 50 acquires information from a card medium. For example, the card medium may be an ID card such as an employee identification card or a service card. This ID card is carried by the operator. In the ID card, identification information for identifying the operator is stored in advance. The card reader 50 acquires the information stored in the ID card from the ID card and provides the information to the control unit 100.

The vein sensor 60 acquires a vein pattern from a finger, a palm, or the like of a person. The vein sensor 60 provides the acquired vein pattern to the control unit 100. In addition, here, a case where biometric information provided to the control unit 100 is a vein pattern will be described, however, the present invention is not limited thereto. As long as the biometric information provided to the control unit 100 is according to the human body such as a pattern of a fingerprint, a palm print, or an iris, and is capable of identifying a person, the biometric information provided to the control unit 100 may be any information.

The control unit 100 includes an identification information acquisition unit 110, an identification information authentication unit 120, a biometric information acquisition unit 130, a biometric authentication unit 140, a selection information acquisition unit 150, a specific operation reception unit 160, an operation information output unit 170, a display control unit 180, and an operation reception unit 190.

The identification information acquisition unit 110 acquires the identification information provided from the card reader 50 and outputs the acquired identification information to the identification information authentication unit 120.

The identification information authentication unit 120 authenticates the identification information output from the identification information acquisition unit 110.

The biometric information acquisition unit 130 acquires the biometric information provided from the vein sensor 60 and outputs the acquired biometric information to the biometric authentication unit 140.

The biometric authentication unit 140 authenticates the biometric information output from the biometric information acquisition unit 130.

The selection information acquisition unit 150 acquires information indicating an operation of selecting an operation target device among operations performed with the keyboard 30 or the mouse 40 by the operator, from the keyboard 30 or the mouse 40. In this example, the operation target device includes a circuit breaker, a disconnecting switch, a switch, a phase adjustment device, a voltage adjustment device, and the like of the substation T. The operator selects which one of the circuit breaker, the disconnecting switch, the switch, the phase adjustment device, and the voltage adjustment device as the operation target device by operating the keyboard 30 or the mouse 40. The selection information acquisition unit 150 acquires information indicating the device selected by the operator as selection information.

The specific operation reception unit 160 receives a specific operation for the operation target device. In this example, the specific operation is determined for each operation target device in advance. Specifically, the specific operation for the circuit breaker is an operation of changing between an open or closed state of the circuit breaker. In addition, the specific operation for the voltage adjustment device is an operation of changing an output voltage.

The operation reception unit 190 receives an operation other than the specific operation described above. Hereinafter, an operation other than the specific operation is also described as a "general operation". The general operation includes an operation of switching a monitoring screen of a power system, an operation of creating an operation sequence table, an operation of setting an alarm ringing, and the like.

The operation information output unit 170 outputs specific operation information indicating the specific operation received by the specific operation reception unit 160 to the operation target device through the communication unit 70 and the network N.

The display control unit 180 displays an image on the display unit 20 by outputting an image signal to the display unit 20.

### [Operation of centralized control device]

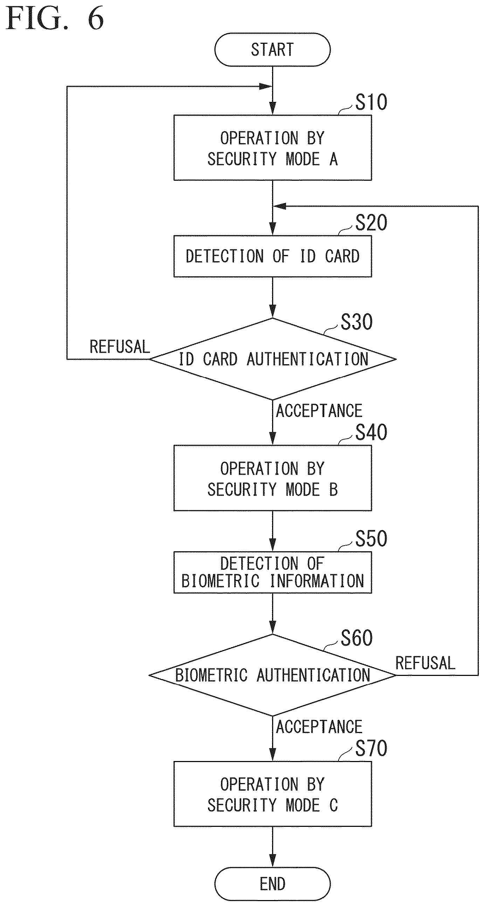

Next, an example of the operation of the centralized control device 10 of the present embodiment will be described with reference to Fig. 6.

Fig. 6 is a flowchart showing an example of the operation of the centralized control device 10 of the present embodiment. The centralized control device 10 has a plurality of kinds of security modes. In this example, the centralized control device 10 has security modes of three kinds including a security mode A, a security mode B, and a security mode C. The security mode A is a mode in a case where neither an authentication by an ID card nor an authentication by a biometric authentication is accepted. The security mode B is a mode in a case where an authentication by an ID card is accepted and a biometric authentication is not accepted. The security mode C is a mode in a case where an authentication by an ID card is accepted and a biometric authentication is accepted. In addition, the case where an authentication is not accepted includes a case where the authentication is refused and a case where the authentication is not performed.

In other words, in a case where an authentication by the identification information authentication unit 120 is accepted and an authentication by the biometric authentication unit 140 is accepted, the specific operation reception unit 160 receives the specific operation. That is, the specific operation reception unit 160 receives the specific operation for the operation target device on the basis of an authentication result by the biometric authentication unit 140 and the operation authority information stored in the storage unit 200.

In addition, in a case where the authentication by the identification information authentication unit 120 is accepted, the operation reception unit 190 receives an operation other than the specific operation.

The centralized control device 10 performs an operation in the security mode A (step S10). In a case where the operator places his/her own ID card on the card reader 50, the card reader 50 detects the ID card (step S20). Upon detecting the ID card, the card reader 50 communicates with the ID card and acquires the identification information stored in the ID card.

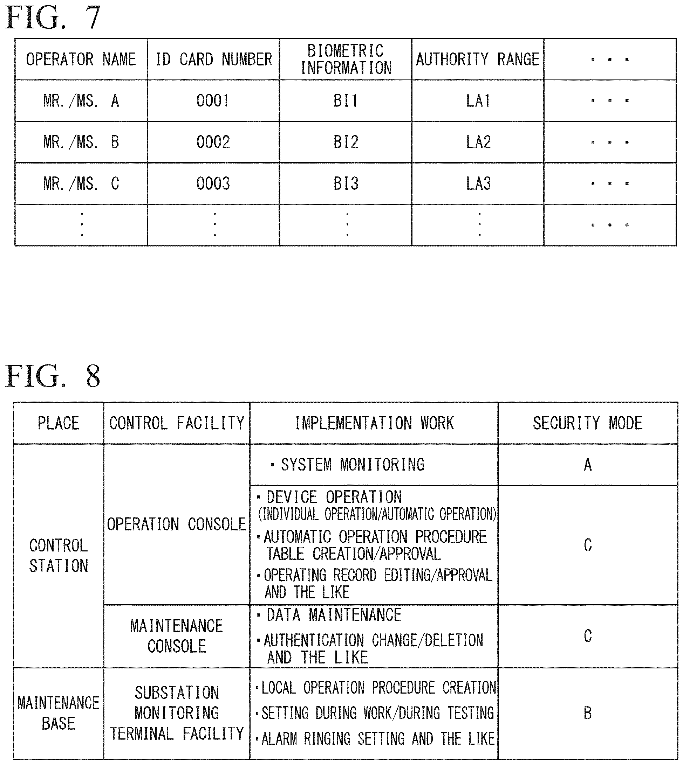

The identification information acquisition unit 110 acquires the identification information from the card reader 50 and outputs the acquired identification information to the identification information authentication unit 120. The identification information authentication unit 120 authenticates the ID card by comparing the identification information acquired from the identification information acquisition unit 110 with the identification information stored in advance in the storage unit 200 (step S30). In this example, the identification information stored in the ID card is an ID card number. Specifically, the number of the ID card given to an operator A may be "0001". The number of the ID card given to an operator B may be "0002". The number of the ID card given to an operator C may be "0003". Here, the identification information stored in the storage unit 200 will be described with reference to Fig. 7.

Fig. 7 is a diagram showing an example of information stored in advance in the storage unit 200 of the present embodiment. In the storage unit 200, identification information of an identification medium for identifying the operator is stored for each operator. Specifically, the ID card number "0001" is stored as the number of the ID card given to the operator A in the storage unit 200. In addition, the ID card number "0002" is stored as the number of the ID card given to the operator B and the ID card number "0003" is stored as the number of the ID card given to the operator C in the storage unit 200, respectively.

Returning to Fig. 6, in a case where the identification information acquired from the identification information acquisition unit 110 is "0001", the identification information authentication unit 120 searches for whether or not the ID card number corresponding to the identification information "0001" is stored in the storage unit 200. In a case where the identification information authentication unit 120 determines that the ID card number corresponding to the identification information is stored in the storage unit 200 (step S30; acceptance), the identification information authentication unit 120 accepts the authentication and the process advances to step S40. In a case where the identification information authentication unit 120 determines that the ID card number corresponding to the identification information is not stored in the storage unit 200 (step S30; refusal), the identification information authentication unit 120 refuses the authentication and advances the process to step S10. In addition, the operation of the identification information authentication unit 120 described above is an example, and the identification information authentication unit 120 may perform the authentication of the ID card by a known procedure other than the above procedure.

In step S40, the centralized control device 10 performs an operation by the security mode B.

In a case where the operator places his/her own palm on the vein sensor 60, the vein sensor 60 detects the vein pattern of the palm, that is, the biometric information (step S50). Upon detecting the biometric information, the vein sensor 60 outputs the detected biometric information to the biometric information acquisition unit 130.

The biometric information acquisition unit 130 acquires the biometric information from the vein sensor 60 and outputs the acquired biometric information to the biometric authentication unit 140. The biometric authentication unit 140 performs a biometric authentication by comparing the biometric information acquired from the biometric information acquisition unit 130 with the biometric information stored in advance in the storage unit 200 (step S60). In this example, the biometric information is a vein pattern of the palm. Specifically, the vein pattern of the operator A may be "BI1". The vein pattern of the operator B may be "BI2". The vein pattern of the operator C may be "BI3". Here, the biometric information stored in the storage unit 200 will be described with reference to Fig. 7 again.

In the storage unit 200, biometric information of the operator is stored for each operator. Specifically, the vein pattern "BI1" is stored as the biometric information of the operator A in the storage unit 200. In addition, the vein pattern "BI2" is stored as the biometric information of the operator B and the vein pattern "BI3" is stored as the biometric information of the operator C in the storage unit 200, respectively.

Returning to Fig. 6, in a case where the biometric information acquired from the biometric information acquisition unit 130 is "BI1", the biometric authentication unit 140 searches for whether or not biometric information corresponding to the biometric information "BI1" is stored in the storage unit 200. In a case where the biometric authentication unit 140 determines that biometric information corresponding to the biometric information acquired by the biometric information acquisition unit 130 is stored in the storage unit 200 (step S60; acceptance), the biometric authentication unit 140 accepts the authentication and advances the process to step S70. In a case where the biometric authentication unit 140 determines that biometric information corresponding to the biometric information acquired by the biometric information acquisition unit 130 is not stored in the storage unit 200 (step S60; refusal), the biometric authentication unit 140 refuses the authentication and returns the process to step S20. In addition, the operation of the biometric authentication unit 140 described above is an example, and the biometric authentication unit 140 may perform the biometric authentication by a known procedure other than the above procedure.

In step S70, the centralized control device 10 performs an operation by the security mode C.

Next, a relationship between the security mode and an implementation work will be described with reference to Fig. 7.

Fig. 8 is a table showing an example of the relationship between the security mode and the implementation work in the present embodiment. In this example, the implementation work in the security mode A includes system monitoring in the control station C. The system monitoring monitors an operation state of a power system. Specifically, the centralized control device 10 acquires information on a voltage or a frequency of power output from the substation T through the network N and displays the acquired information on the centralized display panel PNL or the display unit 20. The operator monitors the information displayed on the centralized display panel PNL or the display unit 20, that is, the operation state of the power system.

In addition, in this example, an implementation work in the security mode B includes creating a local operation procedure table, settings during work/during testing, alarm ringing settings, and the like in the maintenance site M.

In addition, in this example, an implementation work in the security mode C includes a device operation, creation/approval of an automatic operation procedure table, operating record editing/approval, data maintenance, authentication registration/change/deletion, and the like in the control station C.

### [Authority range of operation]

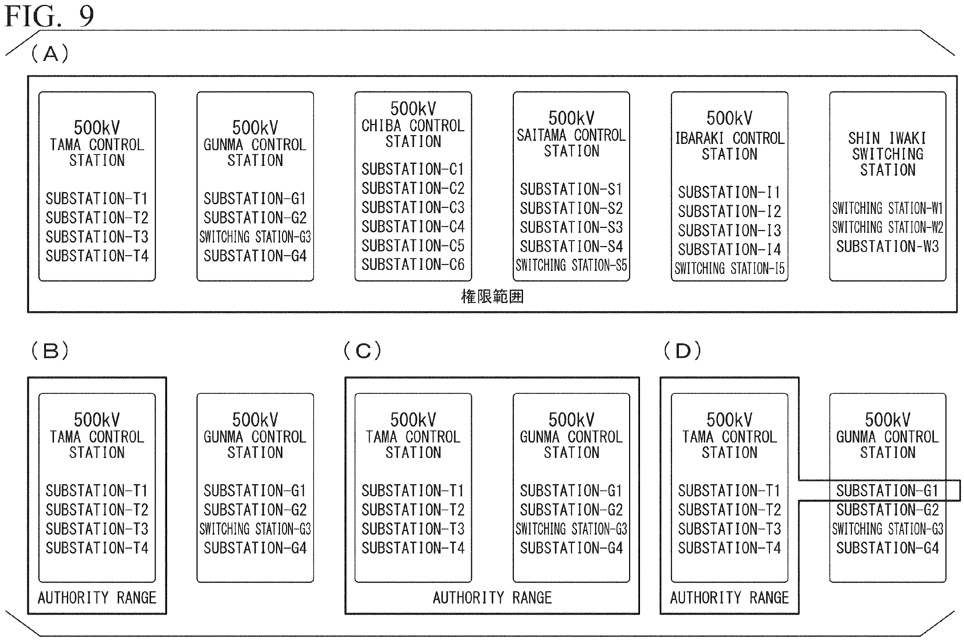

Next, the authority range for operations of the operator will be described with reference to Fig. 9.

Fig. 9 is a diagram showing an example of the authority range for operations in the present embodiment. Here, a specific example of the authority range for operations given to the operator belonging to a "Tama control station" that is an example of the control station C will be described. In the centralized control system 1, it is possible to determine the authority range of the operation for each operator. For example, as shown in Fig. 9A, in addition to each substation in the Tama control station, the authority range of the operation of the operator A is each substation of a Gunma control station, a Chiba control station, a Saitama control station, an Ibaraki control station, and a Shin Iwaki switching station. That is, the operator A is authorized to operate all of the substations in each control station and the switching station.

In addition, as shown in Fig. 9B, the authority range of the operation of the operator B is each substation in the Tama control station. As shown in Fig. 9C, the authority range of the operation of the operator C is each substation in the Tama control station and the Gunma control station. As shown in Fig. 9D, the authority range of the operation of the operator D is each substations in the Tama control station and a part of substation in Gunma control station.

As described above, in the centralized control system 1, it is possible to determine the authority range of the operation on the basis of an area where the device is installed. In addition, it is possible to determine the authority range of the operation in units of the control stations C or it is possible to determine the authority range of the operation in units of the substations T or devices.

The operation authority information indicating the authority ranges for operations described above is stored in the storage unit 200. Specifically, as shown in Fig. 7, in the storage unit 200, an authority range LA1 is stored as the operation authority information for the operator A. In the example described above, the authority range LA1 is each substation in the Tama control station, the Gunma control station, the Chiba control station, the Saitama control station, the Ibaraki control station, and the Shin Iwaki switching station. In addition, in the storage unit 200, an authority range LA2 for the operator B and an authority range LA3 for the operator C are stored, respectively.

That is, in the storage unit 200, the identification information of the identification medium for identifying the operator, the biometric information of the operator, and the operation authority information indicating the authority range of the operation by the operator for the operation target device are stored in association with each other. As described above, the operation authority information may be information indicating the range of the operation authority determined for each operator in advance. In addition, the operation authority information may be information indicating the range of the operation authority according to the area where the device is installed.

### [Specific example of operation]

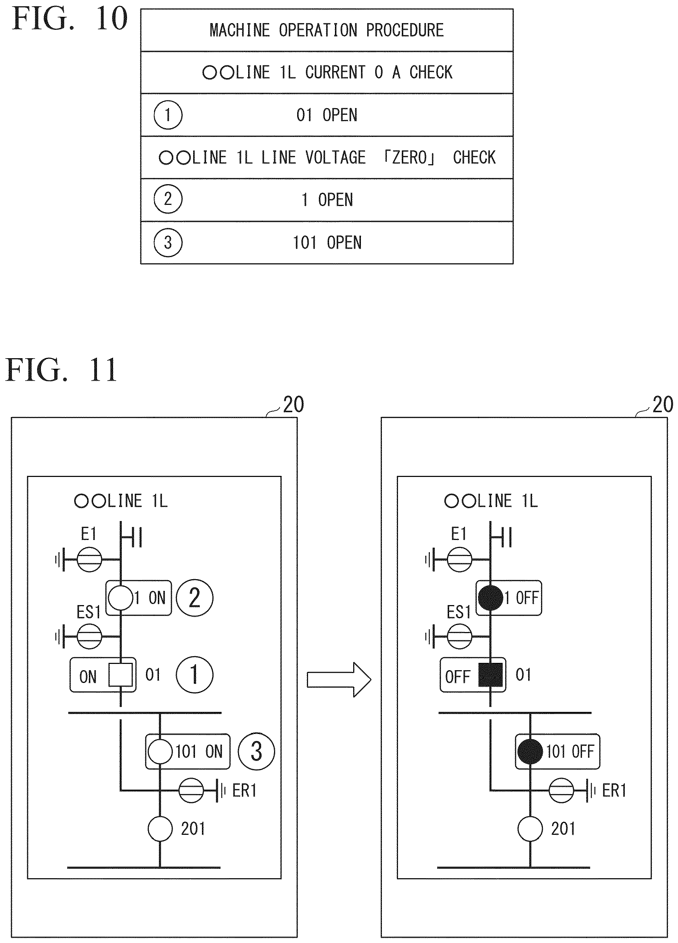

Next, a specific example of an operation by the operator will be described with reference to Figs. 10 to 12.

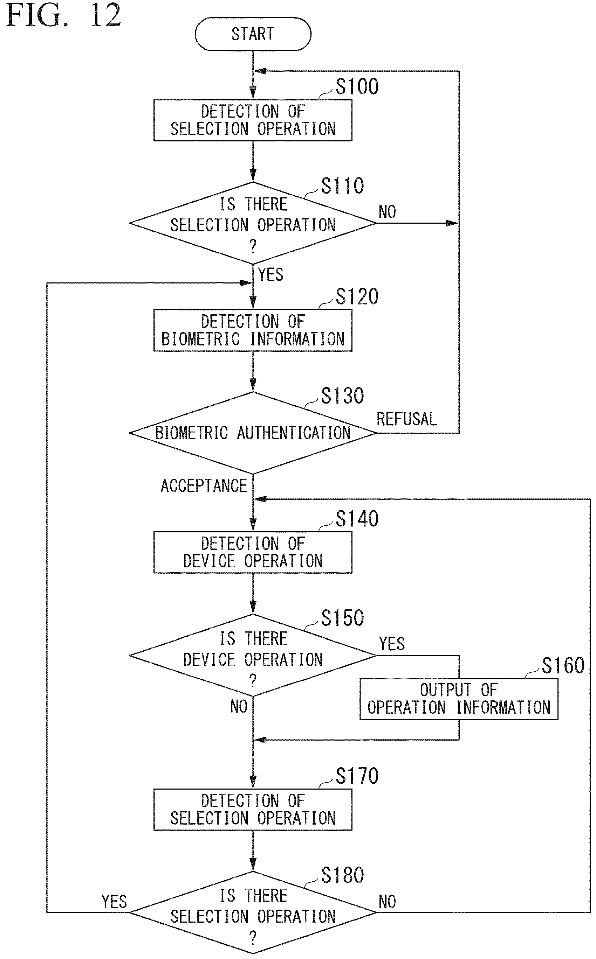

Fig. 10 is a diagram showing an example of an operation procedure of the device in the present embodiment. Fig. 11 is a diagram showing an example of a device operation screen displayed on the display unit 20 of the present embodiment. Fig. 12 is a flowchart showing a specific example of the operation of the centralized control device 10 of the present embodiment.

In this example, an open and closing procedure of the switch when separating a "ooline 1L" from a busbar in the substation will be described. When separating the "ooline 1L" from the busbar, the operator checks that a current of the"ooline 1L" is 0 [A] and opens a 01-th switch (procedure 1). Next, the operator checks that a line voltage of the "ooline 1L" is 0 [V] and opens a first switch (procedure 2). Next, the operator opens a 101^{st} switch (procedure 3).

More specifically, the centralized control device 10 displays the current and the line voltage of the "ooline 1L" on the display unit 20. In addition, the centralized control device 10 displays an arrangement diagram of the switch of the "ooline 1L" on the display unit 20 (refer to Fig. 11). Here, the display of information on the display unit 20 is an example of operation in the security mode A.

The operator places his/her own ID card on the card reader 50. As described with reference to Fig. 6, the identification information authentication unit 120 authenticates the ID card. In a case where the identification information authentication unit 120 accepts the ID card, the operation by the security mode B is possible. An operation of the control unit 100 for an operation of selecting an operation target switch in order to operate the switch of the substation is an example of the operation by the security mode B.

In the procedure 1 described above, the operator checks the current of the "∘∘line 1L" displayed on the display unit 20. In a case where the current of the "∘∘line 1L" is 0 [A], the operator operates the mouse 40 to move a mouse cursor onto an image of the 01-th switch. The operator clicks the mouse 40 in a state in which the mouse cursor is on the image of the 01-th switch. The control unit 100 detects the click operation of the mouse 40 on the image of the 01-th switch as the selection operation of selecting the device (step S100 in Fig. 12). In a case where the click operation of the mouse 40 is performed, the control unit 100 determines whether or not the click operation is the selection operation of selecting the device on the basis of a position of the mouse cursor. In a case where the control unit 100 determines that the click operation is not the selection operation (step S110; NO), the control unit 100 returns the process to step S100. In addition, in a case where the control unit 100 determines that the click operation is the selection operation (step S110; YES), the control unit 100 advances the process to step S120. At this time, the selection information acquisition unit 150 acquires selection information indicating that the 01-th switch is selected as the operation target device.

Here, in a case where the operator performs the selection operation of the device, while placing a palm of one hand on the vein sensor 60, the operator operates the mouse 40 with the other hand. The vein sensor 60 detects the vein pattern of the palm, that is, the biometric information (step S120). The biometric authentication unit 140 authenticates the biometric information (step S130). In a case where the biometric authentication unit 140 refuses the biometric authentication (step S130; refusal), the control unit 100 returns the process to step S100. In addition, in a case where the biometric authentication unit 140 accepts the biometric authentication (step S130; acceptance), the control unit 100 advances the process to step S140. In a case where the biometric authentication unit 140 accepts the biometric authentication, the operation by the security mode C is possible. An operation of the control unit 100 for the operation of the switch of the substation is an example of the operation by the security mode C.

In a case where the click operation of the mouse 40 is performed by the operator, the control unit 100 determines whether or not the click operation is the specific operation for the operation target device on the basis of the position of the mouse cursor. In a case where the control unit 100 determines that the click operation is not the specific device operation (step S150; NO), the control unit 100 advances the process to step S170. In addition, in a case where the control unit 100 determines that the click operation is the specific device operation (step S150; YES), the control unit 100 advances the process to step S160.

The specific operation reception unit 160 receives an operation of opening the 01-th switch. The operation information output unit 170 outputs operation information indicating the operation of opening the 01-th switch received by the specific operation reception unit 160 to the substation T through the communication unit 70 and the network N (step S160). The substation T includes a control device that is not shown and opens the 01-th switch on the basis of the operation information provided through the network N. That is, the centralized control device 10 opens the 01-th switch of the substation T by a remote operation.

Next, the control unit 100 determines whether or not the selection operation has been performed (step S170 and step S180). In a case where the control unit 100 determines that the selection operation has been performed (step S180; YES), the control unit 100 returns the process to step S120. In a case where the control unit 100 determines that the selection operation has not been performed (step S180; NO), the control unit 100 returns the process to step S140.

The control unit 100 outputs the operation information to the operation target device by repeating the procedure described above.

Here, the procedure from step S100 to Step S130 shown in Fig. 12 is processed in the security mode B. In addition, the procedure from step S140 to Step S180 is processed in the security mode C. That is, in a case of the security mode B, the centralized control device 10 receives the operation of selecting the operation target device. In addition, in a case of the security mode C, the centralized control device 10 receives the specific operation for the operation target device. In addition, in a case of the security mode C, in a case where the centralized control device 10 detects the operation of selecting the operation target device, the centralized control device 10 returns to the security mode B and performs the biometric authentication again. That is, the biometric authentication unit 140 authenticates the operation of the operator whenever the selection information acquisition unit 150 acquires the selection information.

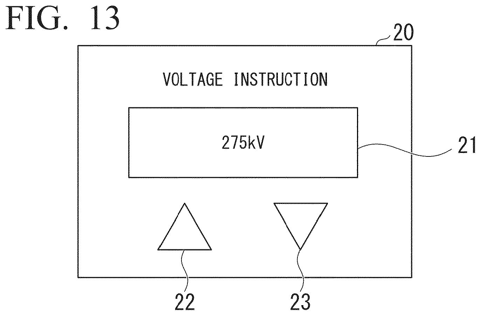

Here, the specific operation for the operation target device includes operations of two kinds including a single operation and a plural operation according to the number of operations From a single operation and a plural operation, a single operation is an operation of changing a state of a device with one operation such as an opening or closing operation of a switch. A plural operation is an operation of changing the state of a device with a plurality of operations such as in an operation of changing output voltage. An example of a plural operation is illustrated in Fig. 13.

Fig. 13 is a diagram showing an example of the operation screen displayed on the display unit 20 of the present embodiment. The display unit 20 displays a screen for performing an operation that indicates the output voltage of the substation T. In this example, on the display unit 20, a voltage display area 21 displaying the output voltage (for example, 275 [kV]) of the substation T, a step-up instruction button image 22, and a step-down instruction button image 23 are displayed. The step-up instruction button image 22 is an image by which the output voltage of the substation T is increased by a predetermined value by the mouse 40 being clicked. In addition, the step-down instruction button image 23 reduces the output voltage of the substation T by a predetermined value by clicking the mouse 40. In order to adjust the output voltage of the substation T to a desired voltage, the operator clicks the step-up instruction button image 22 or the step-down instruction button image 23 only a necessary number of times with the mouse 40.

In a case of this example, the operator selects a voltage adjustment device of the substation T as the operation target device. The selection information acquisition unit 150 detects the selection operation of the voltage adjustment device by the operator (step S100 and step S110 of Fig. 12 ). In a case where the biometric authentication is accepted by the biometric authentication unit 140 (step S120 and step S130), the operator clicks the step-up instruction button image 22 or the step-down instruction button image 23 with the mouse 40. The specific operation reception unit 160 receives this click as a specific device operation (step S140 and step S150). The operation information output unit 170 outputs a step-up instruction or a step-down instruction for one click to the voltage adjustment device of the substation T as the operation information.

Here, the operator may click the step-up instruction button image 22 or the step-down instruction button image 23 with the mouse 40 without performing the selection operation of a device other than the voltage adjustment device. In this case, the selection information acquisition unit 150 determines that the selection operation has not been performed (step S180; NO) and returns the process to step S140. The specific operation reception unit 160 receives the click operation for the step-up instruction button image 22 or the step-down instruction button image 23 as the specific device operation.

That is, in a case where the operator continues to perform the specific device operation without performing the operation of selecting a device other than the voltage adjustment device, the centralized control device 10 does not perform the biometric authentication again. On the other hand, in a case where the operator performs the operation of selecting a device other than the voltage adjustment device, the centralized control device 10 performs the biometric authentication again.

As described above, in the centralized control system 1, the centralized control device 10 includes the biometric authentication unit 140. The biometric authentication unit 140 performs the biometric authentication of the operator whenever the selection information acquisition unit 150 acquires the selection information. In addition, the centralized control system 1 includes the storage unit 200 in which the biometric information of the operator and the operation authority information indicating the range of the authority of the operation by the operator for the operation target device are stored in association with each other. In addition, the centralized control system 1 includes the biometric authentication unit 140 authenticating the operation of the operator on the basis of the biometric information acquired by the biometric information acquisition unit 130 and the biometric information stored in the storage unit 200 whenever the selection information acquisition unit 150 acquires the selection information. That is, the centralized control system 1 performs the biometric authentication according to the operation authority of the operator whenever the operator selects the operation target device. With such a constitution, the centralized control system 1 can refuse an operation exceeding the range of an operation authority of an operator of the power facility.

Here, in the prior art, there is a case where once a biometric authentication is accepted, a device is able to be operated afterwards without the biometric authentication being performed again. In this case, there is a case where when an operator leaves a place after the biometric authentication is accepted, a person to whom an operation authority has not been granted is able to perform an operation instead of the operator.

The centralized control system 1 performs the biometric authentication whenever the operator selects the operation target device. Therefore, according to the centralized control system 1, it is possible to prevent the case where when the operator leaves a place after the biometric authentication is accepted, the person to whom the
operation authority is not given is able to perform the operation instead of the operator. That is, according to the centralized control system 1, it is possible to improve the security level of the device operation as compared with the prior art.

In addition, in the centralized control system 1, the range of the operation authority is determined for each operator in advance. Therefore, according to the centralized control system 1, it is possible to determine the range of the operation authority for each operator on the basis of, for example, a position or a responsibility range of the operator. With such a constitution, since the centralized control system 1 can prevent an operation exceeding a responsibility range of the operator, it is possible to improve the security level of the device operation. That is, according to the centralized control system 1, it is possible to refuse an operation exceeding the range of an operation authority of an operator of the power facility.

In addition, in the centralized control system 1, the range of the operation authority is determined in advance on the basis of the area where the device is installed. Therefore, according to the centralized control system 1, it is possible to determine the range of the operation authority for each area where the device is installed on the basis of, for example, an affiliation of the operator or a location of the operation target facility. With such a constitution, since the centralized control system 1 can suppress an operation exceeding the responsibility range of the operator, it is possible to improve the security level of the device operation. That is, according to the centralized control system 1, it is possible to refuse an operation exceeding the range of an operation authority of an operator of the power facility.

In addition, the centralized control system 1 includes authentication units of two kinds including the identification information authentication unit 120 that performs the authentication according to the authentication medium such as an ID card and the biometric authentication unit 140 that performs the authentication according to biometric information.

In the prior art, there is a case where an operation authority of a device is authenticated by an authentication of an authentication medium such as an ID card. In the prior art, in a case of the authentication by an authentication medium such as an ID card, there is a case where when an operator leaves a place having left the ID card in the card reader, a person to whom operation authority has not been granted is able to perform an operation instead of the operator. In addition, in a case where the operator loses the ID card, there is a case where a person who acquires the ID card is able to perform an operation instead of the operator.

The centralized control system 1 authenticates the operation authority by two-stage authentication including the authentication by the authentication medium and the authentication by the biometric information. With such a constitution, the centralized control system 1 may perform the authentication using only the authentication by the authentication medium with respect to an operation of which a required security level is relatively low. In addition, the centralized control system 1 may perform the authentication with a combination of the authentication by the authentication medium and the authentication by the biometric information with respect to an operation of which a required security level is relatively high. That is, the centralized control system 1 can perform the authentication according to the required security level. With such a constitution, the centralized control system 1 can reconcile reducing complications due to the biometric authentication and improving the security level according to the required security level. That is, according to the centralized control system 1, it is possible to improve the security level of the device operation as compared with the prior art. That is, according to the centralized control system 1, it is possible to refuse an operation exceeding the range of an operation authority of an operator of the power facility.

Although the embodiment of the present invention has been described in detail with reference to the drawings, a specific constitution is not limited the embodiment, and it is possible to make appropriate changes without departing from the gist of the present invention.

In addition, each device described above has a computer therein. In addition, a process ofeach process of each device described above is stored in a computer-readable recording medium in the form of a program and the processes described above are performed by the computer reading and executing the program. Here, the computer-readable recording medium means a magnetic disk, a magneto-optical disk, a CD-ROM, a DVD-ROM, a semiconductor memory, or the like. In addition, the computer program may be transmitted to the computer through a communication line and the computer receiving the transmission may execute the program.

In addition, the program described above may be a program for realizing a part of the functions described above. In addition, the program may be a program which may realize the functions described above by combination with a program already recorded in a computer system, which is a so-called differential file (differential program).

### [Reference Signs List]

- 1: Centralized control system
- 10: Centralized control device
- 100: Control unit
- 110: Identification information acquisition unit
- 120: Identification information authentication unit
- 130: Biometric information acquisition unit
- 140: Biometric authentication unit
- 150: Selection information acquisition unit
- 160: Specific operation reception unit
- 170: Operation information output unit
- 180: Display control unit
- 190: Operation reception unit
- 200: Storage unit
- N: Network

## Claims

1. A centralized power facility control system (1) comprising:
a centralized control device (10) including a storage unit (200) that stores biometric information of an operator, and operation authority information indicating a range of authority (LA1, LA2, LA3) for operations of the operator for an operation target device in association with each other;
a network configured to connect the centralized control device (10) and the operation target device to each other,
wherein the centralized power facility control system (1) further comprises:
a biometric information acquisition unit (130) configured to acquire the biometric information (BI1, BI2, BI3) from the operator;
a selection information acquisition unit (150) configured to acquire selection information for selecting the operation target device;
a biometric authentication unit (140) configured to authenticate the operation of the operator on the basis of the biometric information acquired by the biometric information acquisition unit (130) and the biometric information stored in the storage unit (200) whenever the selection information acquisition unit (150) acquires the selection information;
a specific operation reception unit (160) configured to receive a specific operation for the operation target device on the basis of the authentication result from the biometric authentication unit (140), and the operation authority information stored in the storage unit (200); and
an operation information output unit (170) configured to output specific operation information indicating the specific operation received by the specific operation reception unit (160) to the operation target device,
**characterized in that**
the operation target device is a voltage adjustment device of a substation (T);
the specific operation for the voltage adjustment device is to adjust the output voltage of the substation to a desired voltage by a step-up instruction or a step-down instruction, and
wherein, if the selection information acquisition unit (150) detects a selection operation of the voltage adjustment device, and the biometric authentication is accepted by the biometric authentication unit (140), the specific operation reception unit (160) receives the specific operation for the selected voltage adjustment device to adjust the output voltage of the substation to a desired voltage by a step-up instruction or a step-down instruction, whereby the operation information output unit (170) outputs the operation information of a step-up instruction or a step-down instruction to the selected voltage adjustment device, wherein:
if the specific operation reception unit (160) continues to receive the specific operation for the selected voltage adjustment device to adjust the output voltage of the substation to a desired voltage by a step-up instruction or a step-down instruction, without the selection information acquisition unit (150) detecting a selection operation of a device other than the selected voltage adjustment device, the centralized control device (10) does not perform the biometric authentication again; and
if the selection information acquisition unit (150) detects a selection operation of a device other than the selected voltage adjustment device, the centralized control device (10) performs the biometric authentication again.

2. The centralized power facility control system of claim 1, wherein the operation authority information is information indicating the range of the operation authority determined for each operator in advance.

3. The centralized power facility control system of claim 1 or 2, wherein the operation authority information is information indicating the range of the operation authority according to an area where the device is installed.

4. The centralized power facility control system of any one of claims 1 to 3, wherein the storage unit (200) further stores identification information of an identification medium that identifies the operator in association with the biometric information of the operator and the operation authority information indicating the range of the authority of the operation by the operator for the voltage adjustment device,
wherein the centralized power facility control system further comprises:
an identification information acquisition unit (110) configured to acquire the identification information from the identification medium; and
an identification information authentication unit (120) configured to authenticate the operation of the operator on the basis of the identification information acquired by the identification information acquisition unit (110) and the identification information stored in the storage unit (200),
wherein the specific operation reception unit (160) is configured to receive the specific operation for the voltage adjustment device further on the basis of the authentication result by the identification information authentication unit (120).

## Patentansprüche

1. Zentrales Leistungsanlagesteuerungssystem (1), umfassend:
eine zentrale Steuereinheit (10), die eine Speichereinheit (200) beinhaltet, die biometrische Information eines Bedieners und Bedienungsberechtigungsinformation, die einen Bereich von Bedienungsberechtigungen (LA1, LA2, LA3) des Bedieners für eine Bedienungszielvorrichtung in Zuordnung zueinander anzeigen, speichert;
ein Netzwerk, das eingerichtet ist, die zentrale Steuereinheit (10) und die Bedienungszielvorrichtung miteinander zu verbinden,
wobei das zentrale Leistungsanlagesteuerungssystem (1) des Weiteren umfasst:
eine Erfassungseinheit (130) für biometrische Information, die eingerichtet ist, die biometrischen Information (BI1, BI2, BI3) von dem Bediener zu erfassen;
eine Auswahlinformations-Erfassungseinheit (150), die eingerichtet ist, Auswahlinformation zum Auswählen der Bedienungszielvorrichtung zu erfassen;
eine biometrische Authentifizierungseinheit (140), die eingerichtet ist, die Bedienung des Bedieners auf der Grundlage der von der Erfassungseinheit (130) für biometrische Information erfassten biometrischen Information und der in der Speichereinheit (200) gespeicherten biometrischen Information zu authentifizieren, wenn die Auswahlinformations-Erfassungseinheit (150) die Auswahlinformation erfasst;
eine Empfangseinheit (160) für spezifische Bedienung, die zum Empfangen einer spezifischen Bedienung für die Bedienungszielvorrichtung auf der Grundlage des Authentifizierungsergebnisses von der biometrischen Authentifizierungseinheit (140) und der in der Speichereinheit (200) gespeicherten Bedienungsberechtigungsinformation eingerichtet ist; und
eine Bedienungsinformations-Ausgabeeinheit (170), die eingerichtet ist, spezifische Bedienungsinformation, die die von der Empfangseinheit (160) für spezifische Bedienung empfangene spezifische Bedienung anzeigt, an die Bedienungszielvorrichtung auszugeben,
**dadurch gekennzeichnet, dass**
die Bedienungszielvorrichtung eine Spannungseinstellvorrichtung einer Unterstation (T) ist;
die spezifische Bedienung für die Spannungseinstellvorrichtung darin besteht, die Ausgangsspannung der Unterstation durch eine Anhebungsanweisung oder eine Absenkungsanweisung auf eine gewünschte Spannung einzustellen, und
wobei, falls die Auswahlinformations-Erfassungseinheit (150) eine Auswahlbedienung der Spannungseinstellvorrichtung detektiert und die biometrische Authentifizierung von der biometrischen Authentifizierungseinheit (140) akzeptiert wird, die Empfangseinheit (160) für spezifische Bedienung die spezifische Bedienung für die ausgewählte Spannungseinstellvorrichtung empfängt, um die Ausgangsspannung der Unterstation durch eine Anhebungsanweisung oder eine Absenkungsanweisung auf eine gewünschte Spannung einzustellen, wobei die Bedienungsinformations-Ausgabeeinheit (170) die Bedienungsinformation einer Anhebungsanweisung oder einer Absenkungsanweisung an die ausgewählte Spannungseinstellvorrichtung ausgibt, wobei:
falls die Empfangseinheit (160) für spezifische Bedienung weiterhin die spezifische Bedienung für die ausgewählte Spannungseinstellvorrichtung empfängt, um die Ausgangsspannung der Unterstation durch eine Anhebungsanweisung oder eine Absenkungsanweisung auf eine gewünschte Spannung einzustellen, ohne dass Auswahlinformations-Erfassungseinheit (150) eine Auswahlinformation einer anderen Vorrichtung als der ausgewählten Spannungseinstellvorrichtung detektiert, die zentrale Steuereinrichtung (10) die biometrische Authentifizierung nicht erneut durchführt; und
falls die Auswahlinformations-Erfassungseinheit (150) eine Auswahlbedienung einer anderen Vorrichtung als der ausgewählten Spannungseinstellvorrichtung erkennt, die zentrale Steuereinrichtung (10) die biometrische Authentifizierung erneut durchführt.

2. Zentrales Leistungsanlagesteuerungssystem nach Anspruch 1, wobei die Bedienungsberechtigungsinformation eine Information ist, die den Bereich der Bedienungsberechtigung angibt, der für jeden Bediener im Voraus bestimmt wurde.

3. Zentrales Leistungsanlagesteuerungssystem nach Anspruch 1 oder 2, wobei die Bedienungsberechtigungsinformation eine Information ist, die den Bereich der Bedienungsberechtigung entsprechend einem Gebiet angibt, in dem die Vorrichtung installiert ist.

4. Zentrales Leistungsanlagesteuerungssystem nach einem der Ansprüche 1 bis 3, wobei die Speichereinheit (200) ferner eine Identifikationsinformation eines Identifikationsmediums speichert, das den Bediener in Zuordnung zu der biometrischen Information des Bedieners und der Bedienungsberechtigungsinformation, die den Bereich der Bedienungsberechtigung des Bedieners für die Spannungseinstellvorrichtung angibt, identifiziert,
wobei das zentrale Leistungsanlagesteuerungssystem ferner umfasst:
eine Identifikationsinformations-Erfassungseinheit (110), die eingerichtet ist, die Identifikationsinformation von dem Identifikationsmedium zu erfassen; und
eine Identifikationsinformations-Authentifizierungseinheit (120), die eingerichtet ist, die Bedienung des Bedieners auf der Grundlage der Identifikationsinformation, die von der Identifikationsinformations-Erfassungseinheit (110) erfasst wurde, und der Identifikationsinformation, die in der Speichereinheit (200) gespeichert ist, zu authentifizieren,
wobei die Empfangseinheit (160) für spezifische Bedienung eingerichtet ist, die spezifische Bedienung für die Spannungseinstellvorrichtung des Weiteren auf der Grundlage des Authentifizierungsergebnisses durch die Identifikationsinformations-Authentifizierungseinheit (120) zu empfangen.

## Revendications

1. Un système (1) de commande centralisé d'installation de production d'énergie comprenant :
un dispositif (10) de commande centralisé incluant une unité (200) de stockage qui stocke des informations biométriques d'un opérateur, et des informations d'autorité d'opération indiquant une plage d'autorité (LA1, LA2, LA3) pour des opérations par l'opérateur pour un dispositif cible d'opération en association les unes avec les autres ;
un réseau configuré pour connecter le dispositif (10) de commande centralisé et le dispositif cible d'opération l'un à l'autre ; et
dans lequel le système (1) de commande centralisé d'installation de production d'énergie comprend en outre :
une unité (130) d'acquisition d'informations biométriques configurée pour acquérir les informations biométriques (BI1, BI2, BI3) de l'opérateur ;
une unité (150) d'acquisition d'informations de sélection configurée pour acquérir des informations de sélection pour sélectionner le dispositif cible d'opération ;
une unité (140) d'authentification biométrique configurée pour authentifier l'opération de l'opérateur sur la base des informations biométriques acquises par l'unité (130) d'acquisition d'informations biométriques et des informations biométriques stockées dans l'unité (200) de stockage chaque fois que l'unité (150) d'acquisition d'informations de sélection acquiert les informations de sélection ;
une unité (160) de réception d'opération spécifique configurée pour recevoir une opération spécifique pour le dispositif cible d'opération sur la base du résultat d'authentification par l'unité (140) d'authentification biométrique, et les informations d'autorité d'opération stockées dans l'unité (200) de stockage ; et
une unité (170) d'émission d'informations d'opération configurée pour émettre des informations d'opération spécifique indiquant l'opération spécifique reçue par l'unité (160) de réception d'opération spécifique au dispositif cible d'opération,
**caractérisé en ce que**
le dispositif cible d'opération est un dispositif d'ajustement de voltage d'une sous-station (T) ;
l'opération spécifique pour le dispositif d'ajustement de voltage est d'ajuster le voltage de sortie de la sous-station à un voltage souhaité par une instruction d'incrémentation ou une instruction de décrémentation, et
dans lequel, si l'unité (150) d'acquisition d'information de sélection détecte une opération de sélection du dispositif d'ajustement de voltage, et si l'authentification biométrique est acceptée par l'unité (140 d'authentification biométrique, l'unité (160) de réception d'opération spécifique reçoit l'opération spécifique pour le dispositif d'ajustement de voltage sélectionné pour ajuster le voltage de sortie de la sous-station à un voltage souhaité par une instruction d'incrémentation ou une opération de décrémentation, de sorte que l'unité (170) d'émission d'informations d'opération émette les informations d'opération d'une instruction d'incrémentation ou d'une instruction de décrémentation au dispositif d'ajustement de voltage choisi, dans lequel :
si l'unité (160) de réception d'opération spécifique continue de recevoir l'opération spécifique pour le dispositif d'ajustement de voltage sélectionné pour ajuster le voltage de sortie de la sous-station à un voltage souhaité par une instruction d'incrémentation ou de décrémentation, sans que l'unité (150) d'acquisition d'information de sélection détecte une opération de sélection d'un dispositif autre que le dispositif d'ajustement de voltage sélectionné, le dispositif (10) de commande centralisé ne met pas en œuvre à nouveau l'authentification biométrique ; et
si l'unité (150) d'acquisition d'information de sélection détecte une opération de sélection d'un dispositif autre que le dispositif d'ajustement de voltage sélectionné, le dispositif (10) de commande centralisé met en œuvre à nouveau l'authentification biométrique.

2. Le système de commande centralisée d'installation de production d'énergie selon la revendication 1, dans lequel les informations d'autorité d'opération sont des informations indiquant la plage de l'autorité d'opération déterminée pour chaque opérateur à l'avance.

3. Le système de commande centralisé d'installation de production d'énergie selon la revendication 1 ou 2, dans lequel les informations d'autorité d'opération sont des informations indiquant la plage de l'autorité d'opération selon une zone où le dispositif est installé.

4. Le système de commande centralisé d'installation de production d'énergie selon l'une quelconque des revendications 1 à 3, dans lequel l'unité (200) de stockage stocke en outre des informations d'identification d'un support d'identification qui identifie l'opérateur en association avec les informations biométriques de l'opérateur et les informations d'autorité d'opération indiquant la plage de l'autorité de l'opération par l'opérateur pour le dispositif d'ajustement de voltage,
dans lequel le système de commande centralisé d'installation de production d'énergie comprend en outre :
une unité (110) d'acquisition d'informations d'identification configurée pour acquérir les informations d'identification à partir du support d'identification ; et
une unité (120) d'authentification d'informations d'identification configurée pour authentifier l'opération de l'opérateur sur la base des informations d'identification acquises par l'unité (110) d'acquisition d'informations d'identification et des informations d'identification stockées dans l'unité (200) de stockage,
dans lequel l'unité de réception (160) d'opération spécifique est configurée pour recevoir l'opération spécifique pour le dispositif d'ajustement de voltage en outre sur la base du résultat d'authentification par l'unité (120) d'authentification d'informations d'identification.
